# EUROPÄISCHE PATENTSCHRIFT

(11) **EP 3 441 187 B1**
(45) Veröffentlichungstag und Bekanntmachung des Hinweises auf die Patenterteilung: **03.06.2020**
(21) Anmeldenummer: 18186383.8
(22) Anmeldetag: 30.07.2018
(51) Int. Cl.: B25B 11/00, B25B 1/24, B23Q 3/06, B65D 19/44, B23Q 1/03

(54) **WERKSTÜCKHANDHABUNGSAUSRÜSTUNG MIT EINER MEHRZAHL VON WERKSTÜCKTRÄGERN UND MINDESTENS EINER TRÄGEREINSTELLSTATION**
WORKPIECE HANDLING EQUIPMENT WITH A PLURALITY OF WORKPIECE CARRIERS AND AT LEAST ONE CARRIER SETTING STATION
ÉQUIPEMENT DE MANIPULATION DE PIÈCES À USINER DOTÉ D'UNE PLURALITÉ DE PORTES-PIÈCES ET D'AU MOINS UNE STATION DE RÉGLAGE DE PORTES-PIÈCES

(30) Priorität: 03.08.2017 DE 202017104638 U
(43) Veröffentlichungstag der Anmeldung: 13.02.2019
(73) Patentinhaber: Matrix GmbH Spannsysteme und Produktionsautomatisierung, 73760 Ostfildern-Nellingen (DE)
(72) Erfinder: Meintrup, Hubert, 70327 Stuttgart (DE); Schumacher, Jörg, 70197 Stuttgart (DE)
(74) Vertreter: REHBERG HÜPPE + PARTNER

(56) Entgegenhaltungen:
- DE-A1-102012 017 459
- DE-B3-102013 103 464
- DE-U1-202010 000 536
- US-A- 4 752 063

## Beschreibung

### TECHNISCHES GEBIET DER ERFINDUNG

Die Erfindung bezieht sich auf eine Werkstückhandhabungsausrüstung mit einer Mehrzahl von Werkstückträgern, die jeweils eine Mehrzahl von parallel zueinander in einem Spannrahmen angeordneten Auflagerbolzen, die mit ihren oberen Enden ein Werkstückauflager ausbilden, und eine Fixiereinrichtung zum Fixieren der Auflagerbolzen an dem Spannrahmen aufweisen, wobei bei deaktivierter Fixiereinrichtung jeder der Auflagerbolzen in seiner Hauptrichtung gegenüber dem Spannrahmen einzeln beweglich ist.

Eine solche Werkstückhandhabungsausrüstung kann an unterschiedlich konturierte Werkstücke so angepasst werden, dass die Werkstückauflager der Werkstückträger Negativkonturen der Werkstücke aufweisen. Dann können die Werkstücke definiert auf den Werkstückträgern ausgerichtet durch einen Produktions-, Behandlungs- und/oder Vermessungsprozess verfahren werden.

### STAND DER TECHNIK

Ein Werkstückträger mit einer Mehrzahl von Auflagerbolzen zur Ausbildung eines Werkstückauflagers für ein Werkstück mit dreidimensionalem Verlauf seiner Oberfläche ist aus der DE 20 2010 000 536 U1 bekannt. Die parallel zueinander ausgerichteten Auflagerbolzen sind in einem Spannbereich, in dem sie ihren maximalen Durchmesser aufweisen, von einem Spannrahmen umschlossen und mit einer seitlichen Spannkraft durch Reibschluss untereinander und gegenüber dem Spannrahmen fixierbar. Ohne die Spannkraft sind die Auflagerbolzen gegen eine Gegenkraft einzeln in ihrer Längsrichtung verschiebbar. Die Gegenkraft wird auf jeden einzelnen Auflagerbolzen durch Reibung zwischen einem im Durchmesser reduzierten Bereich des Auflagerbolzens und einer gegenüber dem Spannrahmen ortsfesten Reibfläche aufgebracht. Dadurch wird es ermöglicht, den Auflagerbolzen auch ohne Verwendung eines die dreidimensionale Oberfläche aufweisenden Objekts solche Relativpositionen gegenüber dem Spannrahmen zu geben, dass sie mit ihren oberen Enden den dreidimensionalem Verlauf der Oberfläche der Werkstücks nachformen. Konkret können die einzelnen Auflagerbolzen nacheinander mit einem Ausrichtelement gegenüber dem Spannrahmen verschoben werden. Nachteilig bei dem bekannten Werkstückträger ist sein aufwändiger Aufbau, der die Verwendung einer Vielzahl derartiger Werkstückträger in einer Werkstückhandhabungsausrüstung kostspielig macht.

Aus der DE 10 2013 103 464 B3 ist ein weiterer Werkstückträger mit mehreren Auflagerbolzen bekannt, die jeweils längs einer Hauptrichtung gestreckt ausgebildet sind und mit ihren oberen Enden ein Werkstückauflager definieren. Für jeden der Auflagerbolzen ist ein Führungsloch in einer Führung vorgesehen. Mit einer Fixiereinrichtung sind die Auflagerbolzen in den Führungslöchern fixierbar. Die Führungslöcher sind in einem elastisch verformbaren Material ausgebildet, so dass die nicht fixierten Lagerbolzen in den Führungslöchern einzeln gegen eine Gegenkraft verschiebbar sind. Die Fixiereinrichtung übt in ihrer Fixierstellung einen Druck auf das elastisch verformbare Material aus. Auch dieser bekannte Werkstückträger ist von vergleichsweise komplexem Aufbau, was die Verwendung einer Vielzahl derartiger Werkstückträger in einer Werkstückhandhabungsausrüstung kostspielig macht.

Weiterhin sind Werkstückträger mit einer Mehrzahl von parallel zueinander in einem Spannrahmen angeordneten Auflagerbolzen, die mit ihren oberen Enden ein Werkstückauflager ausbilden, und mit einer Fixiereinrichtung zum Fixieren der Auflagerbolzen an dem Spannrahmen bekannt, bei denen bei deaktivierter Fixiereinrichtung jeder der Auflagerbolzen in seiner Hauptrichtung gegen die Rückstellkraft einer Druckfeder oder eines Überdrucks in einer rückwärtigen Druckkammer einzeln gegenüber dem Spannrahmen beweglich ist. Bei diesen bekannten Werkstückträgern kann ein Werkstück in das von den oberen Enden der Auflagerbolzen ausgebildete Werkstückauflager eingedrückt werden, und dann kann das so an das Werkstück adaptierte Werkstückauflager durch Aktivieren der Fixiereinrichtung fixiert werden. Eine Einstellung dieser bekannten Werkstückträger ohne das Werkstück oder ein entsprechendes Modell des Werkstücks ist jedoch nicht möglich. Außerdem sind auch diese bekannten Werkstückträger von vergleichsweise komplexem Aufbau und daher für ihre zahlreichen Verwendung in einer Werkstückhandhabungsausrüstung sehr kostspielig.

### AUFGABE DER ERFINDUNG

Der Erfindung liegt die Aufgabe zugrunde, eine Werkstückhandhabungsausrüstung mit einer Mehrzahl von Werkstückträgern aufzuzeigen, bei der die Werkstückträger zwar an unterschiedlich dreidimensional konturierter Werkstücke adaptierbar aber dennoch kostengünstig bereitstellbar sind.

### LÖSUNG

Die Aufgabe der Erfindung wird durch eine Werkstückhandhabungsausrüstung mit den Merkmalen des unabhängigen Patentanspruchs 1 gelöst. Die Patentansprüche 2 bis 8 betreffen bevorzugte Ausgestaltungen der erfindungsgemäßen Werkstückhandhabungsausrüstung. Die Patentansprüche 9 und 10 sind auf bevorzugte Verwendungen der erfindungsgemäßen Werkstückhandhabungsausrüstung gerichtet.

### BESCHREIBUNG DER ERFINDUNG

Eine erfindungsgemäße Werkstückhandhabungsausrüstung umfasst neben einer Mehrzahl von Werkstückträgern, die jeweils eine Mehrzahl von parallel zueinander in einem Spannrahmen angeordneten Auflagerbolzen, welche mit ihren oberen Enden ein Werkstückauflager ausbilden, und eine Fixiereinrichtung zum Fixieren der Auflagerbolzen an dem Spannrahmen aufweisen, wobei bei deaktivierter Fixiereinrichtung jeder der Auflagerbolzen in seiner Hauptrichtung gegenüber dem Spannrahmen einzeln beweglich ist, mindestens eine Trägereinstellstation, die einen Stützrahmen, auf welchen die Werkstückträger einzeln unter definierter Relativausrichtung des jeweiligen Spannrahmens gegenüber dem Stützrahmen aufsetzbar sind, und fluchtend mit jedem der Auflagerbolzen des aufgesetzten Werkstückträgers einen Stützbolzen aufweist, welcher bei deaktivierter Fixiereinrichtung den jeweiligen Auflagerbolzen in dessen Hauptrichtung einzeln nach unten abstützt.

Um die Werkstückträger besonders einfach halten zu können, umfasst die erfindungsgemäße Werkstückhandhabungsausrüstung die Trägereinstellstation. Mithilfe dieser Trägereinstellstation sind die Werkstückträger einstellbar, um das jeweils von den oberen Enden ihrer Auflagerbolzen ausgebildete Werkstückauflager an ein bestimmtes Werkstück mit dreidimensional geformter Oberfläche zu adaptieren. Diese Trägereinstellstation kann ähnlich aufgebaut sein wie ein aufwändigerer Werkstückträger nach dem Stand der Technik, ohne dass die Trägereinstellstation aber zwingend eine Fixiereinrichtung benötigt. Dieser Aufwand fällt bei der erfindungsgemäßen Werkstückhandhabungsausrüstung aber nur einmal für die Trägereinstellstation und nicht für jeden Werkstückträger an. Vielmehr können bei der erfindungsgemäßen Werkstückhandhabungsausrüstung um ein Vielfaches mehr Werkstückträger als Trägereinstellstationen vorhanden sein. Beispielsweise mindestens 10 x mehr oder mindestens 100 x mehr.

Die Werkstückträger der erfindungsgemäßen Werkstückhandhabungsausrüstung können im Wesentlichen ausschließlich aus dem Spannrahmen, der darin angeordneten Mehrzahl von parallel zueinander ausgerichteten Auflagerbolzen und der Fixiereinrichtung bestehen. Irgendwelche Hilfsmittel zur Ausrichtung der Auflagerbolzen beim Einstellung der Werkstückträger müssen nicht vorhanden sein. So kann jeder der Auflagerbolzen jedes nicht auf dem Stützrahmen der Trägereinstellstation angeordneten Werkstückträgers bei deaktivierter Fixiereinrichtung in seiner vertikal verlaufenden Hauptrichtung gegenüber dem Spannrahmen so frei beweglich sein, dass er bis gegen einen Anschlag an dem Spannrahmen herabfällt.

Die Stützbolzen der Trägereinstellstation, die die Auflagerbolzen des jeweiligen Werkstückträgers bei dessen Einstellen abstützen, können hingegen bezüglich ihrer Relativlage gegenüber dem Stützrahmen in ihrer Hauptrichtung individuell einstellbar sein. Sie können dazu einzeln gegen eine Reibkraft gegenüber dem Spannrahmen verschiebbar sein. Bei ausreichend großer Reibkraft kann dabei auf eine zusätzliche Fixiereinrichtung der Trägereinstellstation verzichtet werden. Eine solche zusätzliche Fixiereinrichtung ist auch nicht nötig, wenn die Stützbolzen der Trägereinstellstationen jeweils mit einem Außengewinde in ein Innengewinde in dem Stützrahmen eingreifen und eine Drehwerkzeugangriffsfläche aufweisen. Sie sind dann durch Verdrehen mithilfe eines an der Drehwerkzeugangriffsfläche angreifenden Drehwerkzeugs in ihrer Relativlage gegenüber dem Stützrahmen einstellbar. Dabei kann ihre aktuelle Einschraubstellung durch permanenten Reibschluss zwischen dem Stützbolzen und dem Stützrahmen gesichert sein. Ein solcher permanenter Reibschluss kann beispielsweise durch ein elastisches Element oder auch durch das Ausbilden der Innengewinde in einem Kunststoffkörper des Stützrahmens bewirkt werden.

Wenn die Stützbolzen der Trägereinstellstation Drehwerkzeugangriffsflächen aufweisen, kann die Werkstückhandhabungsausrüstung eine der Trägereinstellstation zugeordnete, ein drehangetriebenes und zu den Drehwerkzeugangriffsflächen der Stützbolzen passendes Drehwerkzeug aufweisende Einstelleinrichtung aufweisen. Diese Einstelleinrichtung kann z. B. CNC- oder CAD-gesteuert sein, um primär die Stützbolzen gegenüber dem Stützrahmen der Trägereinstellstation aber sekundär auch die Auflagerbolzen gegenüber dem Spannrahmen der Werkstückträger individuell auszurichten.

In einer anderen Ausführungsform der Trägereinstellstation der erfindungsgemäßen Werkstückhandhabungsausrüstung sind die Stützbolzen in ihrer Hauptrichtung jeweils elastisch mit einer Federkraft bis gegen einen oberen Anschlag an dem Stützrahmen beaufschlagt, wobei die Federkraft auch nach Abzug der Gewichtskraft des jeweiligen Stützbolzens noch größer als eine Gewichtskraft jedes der Auflagerbolzen jedes der Werkstückträger ist. Die Stützbolzen drücken so die Auflagerbolzen des aufgesetzten Werkstückträgers in eine definierte obere Position gegenüber dem Spannrahmen. Dann kann ein Werkstück in das von den oberen Enden der Auflagerbolzen gebildete Werkstückauflager eingedrückt werden, um dieses Werkstückauflager an das Werkstück zu adaptieren. Dabei werden die Auflagerbolzen mit dem Stützbolzen gegen die rückstellenden Federkräfte nach unten gedrückt. Das adaptierte Werkstückauflager wird dann durch Betätigen der Fixiereinrichtung gegenüber dem Spannrahmen des Werkstückträgers fixiert. So bleibt es erhalten, wenn der Werkstückträger von der Trägereinstellstation abgenommen wird.

Bei der Trägereinstellstation mit den federbelasteten Stützbolzen können diese immer dann an ihrem oberen Anschlag an dem Stützrahmen anliegen, wenn sie nicht mit einer Kraft, die größer ist als die Gewichtskraft jedes Auflagerbolzens jedes der Werkstückträger in ihrer Hauptrichtung von dem Anschlag weg eingedrückt werden. Anders gesagt kommt die Trägereinstellstation auch in dieser Ausführungsform ohne eine Fixiereinrichtung für die Stützbolzen gegenüber dem Stützrahmen aus.

Bei der Verwendung der erfindungsgemäßen Werkstückhandhabungsausrüstung werden die Werkstückträger in der Regel nacheinander auf den Stützrahmen der Trägereinstellstation aufgesetzt und in der Trägereinstellstation bei deaktivierter Fixiereinrichtung bezüglich der Relativlagen ihrer Auflagerbolzen gegenüber dem jeweiligen Spannrahmen eingestellt. Danach werden die eingestellten Relativlagen in der Einstellstation durch Aktivieren der jeweiligen Fixiereinrichtungen fixiert. Anschließend wird der jeweilige Werkstückträger von der Trägereinstellstation abgenommen, wobei die eingestellten Relativlagen der Auflagerbolzen gegenüber dem Spannrahmen und das damit adaptierte Werkstückauflager erhalten bleiben.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch andere Merkmale ergänzt werden oder die einzigen Merkmale sein, die das jeweilige Erzeugnis aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1-5**: zeigen einen Werkstückträger und eine Trägereinstellstation einer ersten Ausführungsform der erfindungsgemäßen Werkstückhandhabungsausrüstung beim Adaptieren an ein Werkstück.
- **Fig. 6**: zeigt eine Trägereinstellstation einer zweiten Ausführungsform der erfindungsgemäßen Werkstückhandhabungsausrüstung und eine dieser zugeordnete Einstelleinrichtung.
- **Fig. 7-10**: zeigen die Trägereinstellstation gemäß Fig. 6 beim Einstellen eines Werkstückträgers, der genauso ausgebildet sein kann wie bei der Werkstückhandhabungsausrüstung gemäß den Fig. 1-5.

### FIGURENBESCHREIBUNG

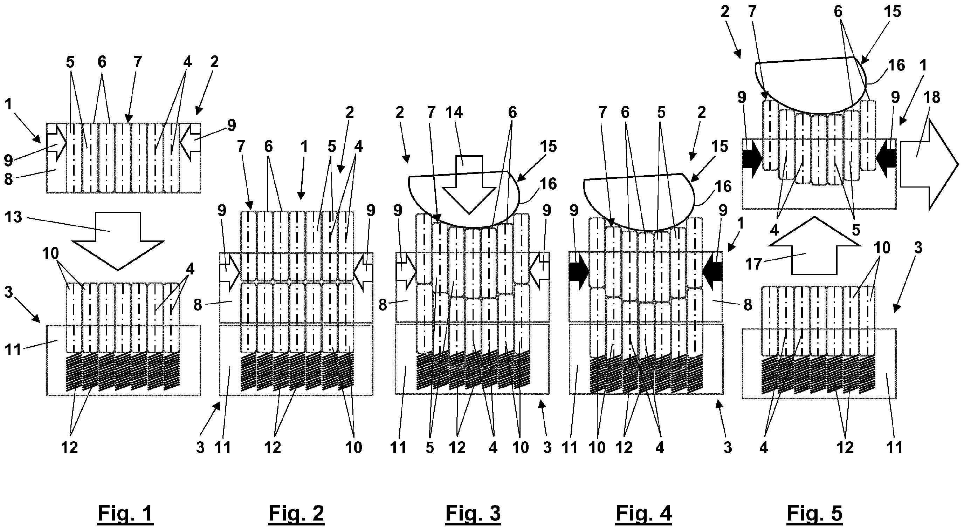

Der in **Fig. 1** dargestellte Werkstückträger 1 steht exemplarisch für eine Vielzahl gleicher Werkstückträger 1 einer Werkstückhandhabungsausrüstung 2, die neben den Werkstückträgern 1 eine Trägereinstellstation 3 umfasst. Der Werkstückträger 1 weist eine Mehrzahl von mit ihren Hauptrichtungen 4 parallel zueinander und hier vertikal ausgerichteten Auflagerbolzen 5 auf, die mit ihren oberen Ende 6 ein Werkstückauflager 7 ausbilden. Die Auflagerbolzen 5 sind in einem Spannrahmen 8 angeordnet und mit einer zunächst deaktivierten Fixiereinrichtung 9 gegenüber dem Spannrahmen 8 fixierbar. Die Trägereinstellstation 3 weist für jeden der Auflagerbolzen 5 einen Stützbolzen 10 auf, der mit dem jeweiligen Auflagerbolzen 5 in der jeweiligen Hauptrichtung 4 fluchtet, wenn der Spannrahmen 8 in vorgegebener definierter Ausrichtung auf einen Stützrahmen 11 der Trägereinstellstation 3 aufgesetzt wird. Dabei sind die Stützbolzen 10 jeweils mit einer Druckfeder 12 bis gegen einen oberen Anschlag an dem Stützrahmen 11 nach oben beaufschlagt, und zwar mit einer Federkraft, die auch nach Abzug der Gewichtskraft des Stützbolzens 10 noch größer als die Gewichtskraft des zugeordneten Auflagerbolzens 5 ist. Dies hat zur Folge, dass beim Aufsetzen des Spannrahmens 8 des Werkstückträgers 1 auf den Stützrahmen 11 der Trägereinstellstation 3 in Richtung eines Pfeils 13 gemäß Fig. 1 die Stützbolzen 10 sämtlich nach oben gedrückt werden, wie dies in **Fig. 2** zu sehen ist.

Gemäß **Fig. 3** wird in Richtung eines Pfeils 14, d. h. von oben, ein Werkstück 15 mit einer dreidimensional konturierten Oberfläche 16 auf das Werkstückauflager 7 aufgelegt und in dieses unter unterschiedlich großer Verschiebung der Auflagerbolzen 5 nach unten eingedrückt.

Das derart adaptierte Werkstückauflager 7 wird gemäß **Fig. 4** durch Aktivieren der Fixiereinrichtung 9 des Werkstückträgers 1 fixiert. Danach kann gemäß **Fig. 5** der Werkstückträger 1 bei weiter aktivierter Fixiereinrichtung 9 von der Trägereinstellstation 3 in Richtung eines Pfeils 17 abgenommen werden, wie dies in Fig. 5 illustriert ist. Dabei werden die gemäß den Fig. 3 und 4 mit den Auflagerbolzen 5 gegen die Federkräfte der Druckfedern 12 eingedrückten Stützbolzen 10 wieder in ihren Hauptrichtungen 4 bis gegen ihre Anschläge an dem Stützrahmen 10 nach oben gedrückt. Die Trägereinstellstation 3 ist damit zum Einstellen des nächsten Werkstückträgers 1 bereit. In Fig. 5 ist angedeutet, dass das Werkstück 15, mit dem der Werkstückträger 1 eingestellt wurde, mit dem Werkstückträger 1 in Richtung eines Pfeils 18 abtransportiert wird. Das Werkstück 15 kann aber auch von dem Werkstückträger 1 abgenommen werden, der dann zum Transport eines gleichen Werkstücks 15 verwendet werden kann.

Die anhand der Fig. 1-5 illustrierte Ausführungsform der Werkstückhandhabungsausrüstung 2 ist insbesondere für das Transportieren von Werkstücken mit toleranzbehafteter dreidimensional geformter Oberfläche 16 geeignet, weil jeder der Werkstückträger 1 individuell an das jeweilige Werkstück 15 angepasst wird, wenn dieses gemäß dem Pfeil 18 gemäß Fig. 5 mit dem Werkstückträger 1 abtransportiert wird.

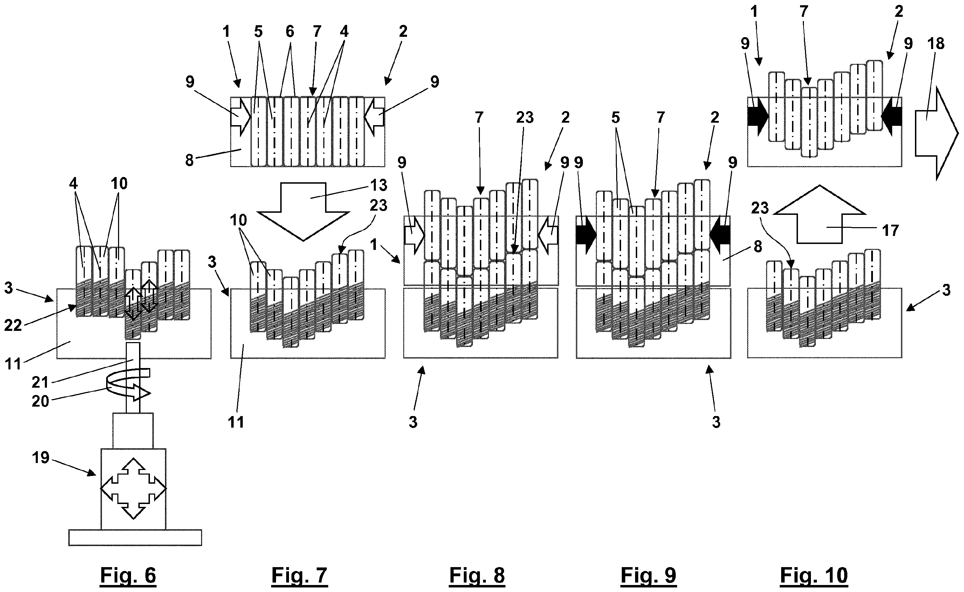

Die anhand der Fig. 6-10 illustrierte Ausführungsform der Werkstückhandhabungsausrüstung 2 eignet sich hingegen besonders für den Transport von weniger toleranzbehafteten Werkstücken oder von Werkstücken mit verformbarer Oberfläche. **Fig. 6** illustriert, wie mit einer Einstelleinrichtung 19, die ein in Richtung eines Drehpfeils 20 drehangetriebenes Drehwerkzeug 21 aufweist, die Trägereinstellstation 3 dieser Ausführungsformen der Werkstückhandhabungsausrüstung 2 eingestellt wird. Dabei greifen die Stützbolzen 10 der Trägereinstellstation 3 mit Außengewinden 22 in entsprechende Innengewinde in den Stützrahmen 11 ein und sie weisen zu dem Drehwerkzeug 21 passende Drehwerkzeugangriffsflächen auf. Durch Verdrehen der einzelnen Stützbolzen 10 mit dem Drehwerkzeug 21 um ihre Hauptrichtungen 4 kann so ihre Relativlage gegenüber dem Stützrahmen 11 eingestellt werden. Diese Relativlage 11 bleibt durch Reibung zwischen den Stützbolzen 10 und dem Stützrahmen 11 erhalten.

Wenn dann gemäß **Fig. 7** ein Werkstückträger 1, der vollständig der Ausführungsform der Werkstückhandhabungsausrüstung 2 gemäß den Fig. 1-5 entsprechen kann, mit deaktivierter Fixiereinrichtung 9 in Richtung des Pfeils 13 von oben auf die Trägereinstellstation 3 aufgesetzt wird, drücken die Stützbolzen 10 abhängig von ihrer vorherigen Einstellung mithilfe der Einstelleinrichtung 19 die ihnen zugeordneten Auflagerbolzen 5 nach oben. So wird mit dem Werkstückträger 1 eine zuvor an der Trägereinstellstation 3 ausgebildete Hilfskontur 23 auf sein Werkstückauflager 7 abgeformt, wie dies in **Fig. 8** zu sehen ist. Gemäß **Fig. 9** werden die Auflagerbolzen 5 in ihren entsprechenden Relativlagen gegenüber dem Spannrahmen 8 durch Aktivieren der Fixiereinrichtung 9 fixiert. Gemäß **Fig. 10** kann dann der Spannrahmen 1 mit weiter aktivierter Fixiereinrichtung 9 von der Trägereinstellstation 3 in Richtung des Pfeils 17 abgenommen und in Richtung des Pfeils 18 abtransportiert werden. Die Trägereinstellstation 3 bleibt dabei bis zum nächsten Einstellen mit der Einstelleinrichtung 19 unverändert und kann solange zum Abformen ihrer Hilfskontur 23 auf die Werkstückauflager 7 anderer Werkstückträger 1 verwendet werden.

### BEZUGSZEICHENLISTE

- 1: Werkstückträger
- 2: Werkstückhandhabungsausrüstung
- 3: Trägereinstellstation
- 4: Hauptrichtung
- 5: Auflagerbolzen
- 6: oberes Ende eines Auflagerbolzens 5
- 7: Werkstückauflager
- 8: Spannrahmen
- 9: Fixiereinrichtung
- 10: Stützbolzen
- 11: Stützrahmen
- 12: Druckfeder
- 13: Pfeil
- 14: Pfeil
- 15: Werkstück
- 16: Oberfläche des Werkstücks 15
- 17: Pfeil
- 18: Pfeil
- 19: Einstelleinrichtung
- 20: Drehpfeil
- 21: Drehwerkzeug
- 22: Außengewinde
- 23: Hilfskontur

## Patentansprüche

1. Werkstückhandhabungsausrüstung (2)
- mit einer Mehrzahl von Werkstückträgern (1), die jeweils
- eine Mehrzahl von parallel zueinander in einem Spannrahmen (8) angeordneten Auflagerbolzen (5), welche mit ihren oberen Enden ein Werkstückauflager (7) ausbilden, und
- eine Fixiereinrichtung (9) zum Fixieren der Auflagerbolzen (5) an dem Spannrahmen (8)
aufweisen,
- wobei bei deaktivierter Fixiereinrichtung (9) jeder der Auflagerbolzen (5) in seiner Hauptrichtung (4) gegenüber dem Spannrahmen (8) einzeln beweglich ist,
**gekennzeichnet durch**
- mindestens eine Trägereinstellstation (3), die
- einen Stützrahmen (11), auf welchen die Werkstückträger (1) einzeln unter definierter Relativausrichtung des jeweiligen Spannrahmens (8) gegenüber dem Stützrahmen (11) aufsetzbar sind, und
- fluchtend mit jedem der Auflagerbolzen (5) des aufgesetzten Werkstückträgers (1) einen Stützbolzen (10), welcher bei deaktivierter Fixiereinrichtung (9) den jeweiligen Auflagerbolzen (5) in dessen Hauptrichtung (4) einzeln nach unten abstützt,
aufweist.

2. Werkstückhandhabungsausrüstung (2) nach Anspruch 1, **dadurch gekennzeichnet, dass** jeder der Auflagerbolzen (5) jedes nicht auf dem Stützrahmen (11) der Trägereinstellstation (3) angeordneten Werkstückträgers (1) bei deaktivierter Fixiereinrichtung (9) in seiner vertikal verlaufenden Hauptrichtung (4) gegenüber dem Spannrahmen (8) so frei beweglich ist, dass er bis gegen einen Anschlag an dem Spannrahmen (8) herabfällt.

3. Werkstückhandhabungsausrüstung (2) nach Anspruch 1 oder 2, **dadurch gekennzeichnet, dass** die Stützbolzen (10) der Trägereinstellstation (3) bezüglich ihrer Relativlage gegenüber dem Stützrahmen (11) in ihrer Hauptrichtung (4) individuell einstellbar sind.

4. Werkstückhandhabungsausrüstung (2) nach Anspruch 3, **dadurch gekennzeichnet, dass** die Stützbolzen (10) jeweils mit einem Außengewinde (22) in ein Innengewinde in dem Stützrahmen (11) eingreifen und eine Drehwerkzeugangriffsfläche aufweisen.

5. Werkstückhandhabungsausrüstung (2) nach Anspruch 4, **dadurch gekennzeichnet, dass** eine aktuelle Einschraubstellung jedes Stützbolzen (10) in das zugehörige Innengewinde durch permanenten Reibschluss gesichert ist.

6. Werkstückhandhabungsausrüstung (2) nach Anspruch 4 oder 5, **gekennzeichnet durch** eine der Trägereinstellstation (3) zugeordnete, ein drehangetriebenes und zu den Drehwerkzeugangriffsflächen der Stützbolzen (10) passendes Drehwerkzeug (21) aufweisende Einstelleinrichtung (19).

7. Werkstückhandhabungsausrüstung (2) nach Anspruch 1 oder 2, **dadurch gekennzeichnet, dass** die Stützbolzen (10) der mindestens einen Trägereinstellstation (3) in ihrer Hauptrichtung (4) jeweils elastisch mit einer Federkraft bis gegen einen oberen Anschlag an dem Stützrahmen (11) beaufschlagt sind, wobei die Federkraft größer ist als eine Gewichtskraft jedes der Auflagerbolzen (5) jedes der Werkstückträger (1).

8. Werkstückhandhabungsausrüstung (2) nach Anspruch 7, **dadurch gekennzeichnet, dass** die Stützbolzen (10) der mindestens einen Trägereinstellstation (3) immer dann an ihrem oberen Anschlag an dem Stützrahmen (11) anliegen, wenn sie nicht mit einer Kraft, die größer ist als die Gewichtskraft jedes der Auflagerbolzen (5) jedes der Werkstückträger (1), in ihrer Hauptrichtung (4) von dem Anschlag weg eingedrückt werden.

9. Verwendung einer Werkstückhandhabungsausrüstung (2) nach einem der vorhergehenden Ansprüche, **dadurch gekennzeichnet, dass** die Werkstückträger (1) nacheinander auf den Stützrahmen (11) der Trägereinstellstation (3) aufgesetzt und in der Trägereinstellstation (3) bei deaktivierter Fixiereinrichtung (9) bezüglich der Relativlagen ihrer Auflagerbolzen (5) gegenüber dem jeweiligen Spannrahmen (8) eingestellt und dass die eingestellten Relativlagen in der Trägereinstellstation durch Aktivieren der jeweiligen Fixiereinrichtung (9) fixiert werden.

10. Verwendung nach Anspruch 9 einer Werkstückhandhabungsausrüstung (2) nach Anspruch 7 oder 8, **dadurch gekennzeichnet, dass** zum Einstellen jedes Werkstückträgers (1) in der Trägereinstellstation (3) bezüglich der Relativlagen seiner Auflagerbolzen (5) gegenüber seinem Spannrahmen (8) ein Werkstück (15) von oben auf das von den oberen Enden seiner Auflagerbolzen (5) ausgebildete Werkstückauflager (7) aufgelegt wird und seine Auflagerbolzen (5) mit dem Werkstück (15) gegen die Federkraft der sie abstützenden Stützbolzen (10) eingedrückt werden.

## Claims

1. Workpiece handling equipment (2)
- comprising a plurality of workpiece carriers (1) which each comprise
- a plurality of bearing pins (5), which are arranged, in parallel with regard to each other, within a clamping frame (8), and which provide a workpiece bearing (7) with their upper ends,
- a fixing device (9) for fixing the bearing pins (5) to the clamping frame (8),
- wherein each of the bearing pins (5) is individually movable in its main direction (4) with regard to the clamping frame (8), when the fixing device (9) is deactivated,
**characterised by**
- at least one carrier adjustment station (3) comprising
- a supporting frame (11) on which the workpiece carriers (1) can be put one by one with a defined relative orientation of the respective clamping frame (8) with regard to the supporing frame (11), and
- one supporting pin (10) falling in line with each of the bearing pins (5) of the workpiece carrier (1) put-on, the supporting pin individually supporting the respective bearing pin (5) in its main direction (4) from below, when the fixing device (9) is deactivated.

2. Workpiece handling equipment (2) according to claim 1, **characterised in that** each of the bearing pins (5) of each of the work piece carriers (1) not arranged on the support frame (11) of the carrier adjustment station (3) is freely movable in its main direction (4) running vertical with regard to the clamping frame (8), when the fixing device (9) is deactivated, such that the bearing pin drops until stopped by a stop on the clamping frame (8).

3. Workpiece handling equipment (2) according to claim 1 or 2, **characterised in that** the supporting pins (10) of the carrier adjustment station (3) are individually adjustable in their main direction (4) with respect to their relative position with regard to the supporting frame (11).

4. Workpiece handling equipment (2) according to claim 3, **characterised in that** each of the the supporting pins (10) engages an internal thread in the supporting frame (11) with an external thread (22) and comprises a turning tool contact surface.

5. Workpiece handling equipment (2) according to claim 4, **characterised in that** a present screwed-in position of each supporting pin (10) in the associated internal thread is secured by a permanent friction fit.

6. Workpiece handling equipment (2) according to claim 4 or 5, **characterised by** an adjustment device (19) assigned to the carrier adjustment station (3) and comprising a rotary driven turning tool (21) fitting the turning tool working surfaces of the supporting pins (10).

7. Workpiece handling equipment (2) according to claim 1 or 2, **characterised in that** the supporting pins (10) of the at least one supporting adjustment station (3) are each elastically subjected to a spring force in their main direction (4) up to an upper stop on the supporting frame (11), wherein the spring force is higher than a weight force of each of the bearing pins (5) of each of the workpiece carriers (1).

8. Workpiece handling equipment (2) according to claim 7, **characterised in that** the supporting pins (10) of the at least one carrier adjustment station (3) always abut against their upper stop on the supporting frame (11), when they are not pressed-in in their main direction (4) away from the stop with a force which is higher than the weight force of each of the bearing pins (5) of each of the workpiece carriers (1).

9. Use of a workpiece handling equipment (2) according to any of the preceding claims, **characterised in that** the workpiece carriers (1) are one after the other put on the support frame (11) of the carrier adjustment station (3) and adjusted in the carrier adjustment station (3) with deactivated fixing device (9) with respect to the relative positions of their bearing pins (5) with regard to the respective clamping frame (8), and that the adjusted relative positions are fixed by activating the respective fixing device (9) in the carrier adjustment station.

10. Use according to claim 9 of a workpiece handling equipment (2) according to claim 7 or 8, **characterised in that**, for adjusting each workpiece carrier (1) in the carrier adjustment station (3) with respect to the relative positions of its bearing pins (5) with regard to its clamping frame (8), a workpiece (15) is placed from above on the workpiece bearing formed by the upper ends of the bearing pins (5) of the workpiece carrier (1) and with the workpiece (15) the bearing pins (5) of the workpiece carrier (1) are pressed-in against the spring force of the supporting pins (10) supporting them.

## Revendications

1. Equipement de manipulation de pièces à usiner (2)
- avec une pluralité de porte-pièces (1) qui comportent respectivement
- une pluralité de goupilles de support (5), disposées parallèlement les unes aux autres dans un cadre de serrage (8), lesquelles constituent un support de pièces (7) avec leurs extrémités supérieures,
- un dispositif de fixation (9) destiné à la fixation des goupilles de support (5) sur le cadre de serrage (8),
- chacune des goupilles de support (5) étant, quand le dispositif de fixation (9) est désactivé, mobile individuellement dans sa direction principale (4) par rapport au cadre de serrage (8),
**caractérisé par**
- au moins une station de réglage de porte-pièces (3), qui comporte
- un cadre d'appui (11) sur lequel les porte-pièces (1) peuvent être posés individuellement selon une orientation relative définie du cadre de serrage (8) respectif par rapport au cadre d'appui (11), et
- une goupille d'appui (10), en affleurement avec chacune des goupilles de support (5) du porte-pièces (1) posé, laquelle, quand le dispositif de fixation (9) est désactivé, supporte individuellement vers le bas la goupille de support (5) respective dans sa direction principale (4).

2. Equipement de manipulation de pièces à usiner (2) selon la revendication 1, **caractérisé en ce que,** quand le dispositif de fixation (9) est désactivé, chacune des goupilles de support (5) de chaque porte-pièces (1) non disposé sur le cadre d'appui (11) de la station de réglage de porte-pièces (3) est mobile librement dans sa direction principale (4), s'étendant verticalement, par rapport au cadre de serrage (8) de telle sorte qu'elle descend jusque contre une butée sur le cadre de serrage (8).

3. Equipement de manipulation de pièces à usiner (2) selon la revendication 1 ou 2, **caractérisé en ce que,** en ce qui concerne leur position relative par rapport au cadre d'appui (11), les goupilles d'appui (10) de la station de réglage de porte-pièces (3) sont réglables individuellement dans leur direction principale (4).

4. Equipement de manipulation de pièces à usiner (2) selon la revendication 3, **caractérisé en ce que,** respectivement avec un filet extérieur (22), les goupilles d'appui (10) engrènent dans un filet intérieur dans le cadre d'appui (11) et comportent une surface d'attaque pour outils de tournage.

5. Equipement de manipulation de pièces à usiner (2) selon la revendication 4, **caractérisé en ce qu'**une position de vissage actuelle de chaque goupille d'appui (10) est bloquée dans le filet intérieur correspondant par une liaison par friction permanente.

6. Equipement de manipulation de pièces à usiner (2) selon la revendication 4 ou 5, **caractérisé par** un dispositif de réglage (19) affecté à la station de réglage de porte-pièces (3) et comportant un outil de tournage (21) entraîné en rotation et adapté aux surface d'attaque pour outils de tournage des goupilles d'appui (10).

7. Equipement de manipulation de pièces à usiner (2) selon la revendication 1 ou 2, **caractérisé en ce que** les goupilles d'appui (10) de la station de réglage de porte-pièces (3) au moins au nombre de un sont, dans leur direction principale (4), exposées respectivement élastiquement à une force de ressort jusque contre une butée supérieure sur le cadre d'appui (11), la force de ressort étant supérieure à un poids de chacune des goupilles de support (5) de chacun des porte-pièces (1).

8. Equipement de manipulation de pièces à usiner (2) selon la revendication 7, **caractérisé en ce que** les goupilles d'appui (10) de la station de réglage de porte-pièces (3) au moins au nombre de un sont, au niveau de leur butée supérieure, plaquées contre le cadre d'appui (11) à chaque fois qu'elles ne sont pas enfoncées et éloignées de la butée dans leur direction principale (4) par une force qui est supérieure au poids de chacune des goupilles de support (5) de chacun des porte-pièces (1).

9. Utilisation d'un équipement de manipulation de pièces à usiner (2) selon l'une des revendications précédentes, **caractérisée en ce que** les porte-pièces (1) sont posés les uns derrière les autres sur le cadre d'appui (11) de la station de réglage de porte-pièces (3) et sont, quand le dispositif de fixation (9) est désactivé, réglés dans la station de réglage de porte-pièces (3) en ce qui concerne les positions relatives de leurs goupilles de support (5) par rapport au cadre de serrage (8) respectif, et **en ce que** les positions relatives réglées sont fixées dans la station de réglage de porte-pièces par l'activation du dispositif de fixation (9) respectif.

10. Utilisation selon la revendication 9 d'un équipement de manipulation de pièces à usiner (2) selon la revendication 7 ou 8, **caractérisée en ce que,** pour le réglage de chaque porte-pièces (1) dans la station de réglage de porte-pièces (3) en ce qui concerne les positions relatives de ses goupilles de support (5) par rapport au cadre de serrage (8), une pièce (15) est mise en place à partir du haut sur le support de pièces (7) constitué par les extrémités supérieures de ses goupilles de support (5), et ses goupilles de support (5) sont enfoncées avec la pièce (15) contre la force de ressort des goupilles d'appui (10) qui les supportent.
